# EUROPEAN PATENT SPECIFICATION

(11) **EP 2 153 729 B1**
(45) Date of publication and mention of the grant of the patent: **16.11.2011**
(21) Application number: 08161090.9
(22) Date of filing: 24.07.2008
(51) Int. Cl.: A23D 7/005, A23D 7/01, A21D 8/00

(54) **Composition for laminated dough**
Zusammensetzung für Blätterteig
Composition pour pâte laminée

(43) Date of publication of application: 17.02.2010
(73) Proprietor: Vandemoortele Izegem NV, 8870 Izegem (BE)
(72) Inventor: Lesaffer, Ans, 8870, Izegem (BE); De Laporte, André, 8870, Izegem (BE)
(74) Representative: Vanhalst, Koen

(56) References cited:
- EP-A- 0 509 707
- EP-A- 1 036 505
- GB-A- 2 351 430
- JP-A- 2000 253 816
- US-A- 6 099 887
- US-B1- 6 248 388
- SAGALOWICZ L ET AL: "Monoglyceride self-assembly structures as delivery vehicles" TRENDS IN FOOD SCIENCE AND TECHNOLOGY, ELSEVIER SCIENCE PUBLISHERS, GB, vol. 17, no. 5, 1 May 2006 (2006-05-01), pages 204-214, XP025081435 ISSN: 0924-2244 [retrieved on 2006-05-01]

## Description

### TECHNICAL FIELD

The present invention relates to the field of food industry. The invention concerns, a margarine-like composition of reduced fat content suitable for the production of laminated doughs. The invention is also directed to a method for preparing said margarine-like composition and to the use thereof for the preparation of a laminated dough.

### BACKGROUND

Laminated dough systems, i.e. systems comprising subsequent layers of dough and layers of another ingredient, in particular of a bakery, laminating margarine or shortening, have been known for years. For example, doughs suitable for the production of puff pastries, croissants, Danish pastries, snacks etc. are laminated doughs wherein, in general, 30 to 70wt% of total fat based on product is present in the form of thin fat layers, e.g. between 16 and 256 fat layers are present, and wherein each fat layer is present between two dough layers.

During preparation, margarine is placed on top of a (pre-)dough and folded and rolled to form many alternating layers of dough and fat. The margarine needs a tough waxy body over a wide temperature range. It should approximate the consistency of the dough to remain in a continuous unbroken layer as it stretches and becomes thinner. Fat keeps the layers of dough separate and flaky, and moisture attributes "puff" as it turns to steam during the baking process.

The fat must be present in order to give the baked product satisfactory product properties, such as a good texture, a good structure, a good appearance, a good mouthfeel, a good lift, a good specific volume and/or a good ovenspring.

However, the fat content of acceptable products is still rather high, and in the increasing tendency towards healthier food products, there exists a great demand for fat-reduced laminated doughs.

GB-A- 2 351 430 discloses a delivery system comprising an aqueous solution of (an) emulsifier(s) which can be used in different kinds of application, including in fat based products, and in baked goods, inter alia, laminated dough.

Margarines of reduced fat content were developed in reply to consumer requirements for healthy and natural foods. Such margarines include in their formulations ingredients such as starches, gums and/or gelling agents, which replace part of the fat content, thus reducing the calorie contribution per gram of margarine.

However, such formulations show several limitations. One problem for instance it that such formulations mimic margarine only for applications at room temperature. Another problem is that such formulations result in products, margarines as well as laminated dough products, that are unsatisfactory and not comparable with those obtained with conventional margarines, particularly, with regard to sensory characteristics such as crustiness, taste, mouthfeel. Other problems of such formulations regard processing parameters such as handling, availability of ingredients or price.

Therefore, there remains a need in the art to provide a margarine-like composition suitable for the production of laminated doughs, which overcomes at least some of the above mentioned problems. In particular, there is a need in the art for a composition for the preparation of laminated doughs which has a reduced fat content, which is perceived as a healthy and natural food, and which results in laminated doughs having good organoleptic and nutritional properties.

### SUMMARY

The present invention provide a composition for laminated doughs which overcomes at least some of the above-mentioned problems and which in particular has reduced fat content, having a formulation that includes ingredients acceptable by a consumer, and when used to prepare laminated doughs, provides bakery products, having good organoleptic, sensory and nutritional properties.

The Applicant has now shown that by the selection and combined use of particular amounts of thickeners and emulsifiers, a margarine-like composition can be obtained having suitable properties, such as viscosity, rolling-out properties, stability, permitting easy handling and easy processing. In addition, laminated doughs such as croissants, prepared using the present margarine-like composition, fulfill the desired sensory requirements such as good texture and appearance, crispiness, fluffiness and taste.

In a first aspect, the present invention provides a composition for laminated dough comprising, in percentage by weight of the total weight:
- from 45 to 65 % of a fat phase comprising a fat blend and at least one emulsifier,
- from 35 to 55% of an aqueous phase comprising water, and at least two thickeners whereby at least one first thickener is an alginate and at least one second thickener is selected from the group consisting of inulin, maltodextrin, and acacia gum,
   whereby said emulsifier is
   i) a citric acid ester, or
   ii) an emulsifier, different from said citric acid ester, and selected from the group consisting of monoglycerides of fatty acids and diglycerides of fatty acids and mixtures thereof, or
   iii) a mixture of i) and ii).

In another embodiment, the invention provides a composition, wherein the amount of emulsifier is comprised between 0.2 and 2.5 % by weight of the composition. Preferably a composition is provided wherein the amount of citric acid ester is comprised between 0.2 and 2.5 % by weight of the composition. Alternatively or in combination therewith, a composition is provided wherein the amount of said mono- and/or diglycerides of fatty acids is comprised between 0.2 and 2.5 % by weight of the composition.

In yet another embodiment, the invention provides a composition, wherein the amount of alginate is comprised between 0.1 and 2% by weight of the composition. Preferably said alginate is potassium alginate.

In another preferred embodiment, the invention provides a composition wherein the amount of said second thickener is between 1.5 and 7% by weight of the composition. In one embodiment said second thickener is inulin. Preferably a composition is provided wherein the amount of inulin is comprised between 1.5 and 7% by weight of the composition. In another embodiment said second thickener is maltodextrin. A composition then is provided wherein the amount of maltodextrin is comprised between 1.5 and 7% by weight of the composition. In yet another embodiment said second thickener is acacia gum. Preferably a composition is provided wherein the amount of acacia gum is comprised between 1.5 and 7% by weight of the composition.

The present composition is characterized by a combination of emulsifier and alginate in particularly beneficial and balanced amounts. To their surprise the Applicants noted that although alginates in general are known to destabilize an emulsion, a combination of alginate and an emulsifier at the indicated amounts and ratios in a composition according to the invention provides an acceptable stability to the emulsion system, and, probably related to this partial destabilisation, the Applicants surprisingly noted that sensory characteristics, including better mouthfeel and crispiness, of laminated doughs made with a margarine-like composition of the invention and containing alginate improved drastically compared to the sensory characteristics of laminated doughs, made with margarine-like composition without alginate. In addition, the Applicants showed that additional thickeners, next to alginates, have particularly positive effects on organoleptic properties of laminated doughs, and in particular provide improved mouth feel and flavor to baked laminated dough products.

In a second aspect, the present invention provides a method for the preparation of a composition for laminated dough according to the invention.

In a third aspect, the present invention is directed to the use of a composition according to the invention for the preparation of a laminated dough.

With the insight to better show the characteristics of the invention, some preferred embodiments and examples are described hereafter.

### DETAILED DESCRIPTION OF THE FIGURES

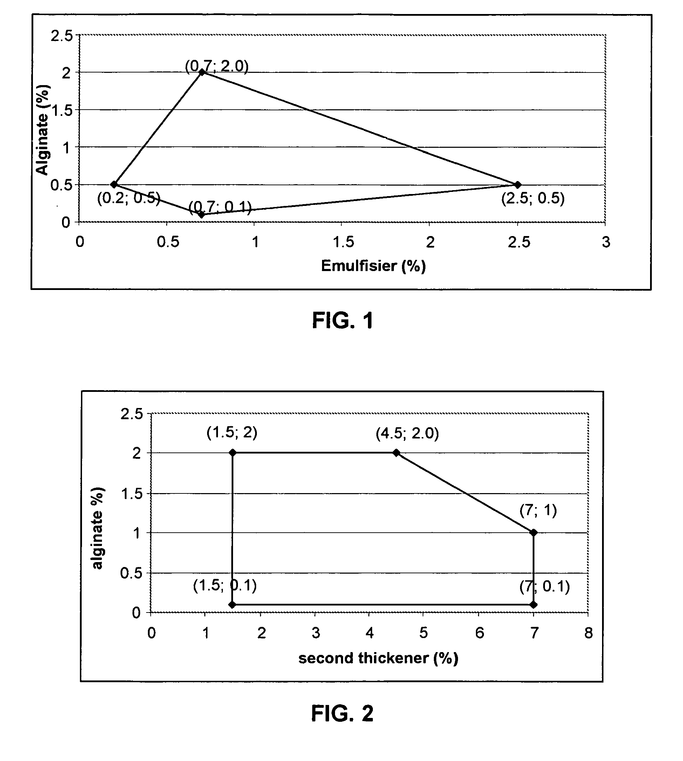

**FIG. 1** is an illustration of the relative amounts of alginate and emulsifier(s) which are used in a composition according to the invention. Amounts of alginate and emulsifier(s) falling inside the delimited area on **FIG. 1** have an acceptable effect in a margarine-like composition according to the invention.
**FIG. 2** is an illustration of the relative amounts of alginate and second thickener which are used in a composition according to the invention. Amounts of alginate and second thickener falling inside the delimited area on **FIG. 2** have an acceptable effect in a margarine-like composition according to the invention.

### DETAILED DESCRIPTION OF THE INVENTION

Unless defined otherwise, all technical and scientific terms used herein have the same meaning as is commonly understood by one of skill in the art.

The articles "a" and "an" are used herein to refer to one or to more than one, i.e. to at least one of the grammatical object of the article. By way of example, "a sample" means one sample or more than one sample.

Throughout this application, the term "about" is used to indicate that a value includes the standard deviation of error for the device or method being employed to determine the value.

The recitation of numerical ranges by endpoints includes all integer numbers and, where appropriate, fractions subsumed within that range (*e.g.* 1 to 5 can include 1, 2, 3, 4 when referring to, for example, a number of samples, and can also include 1.5, 2, 2.75 and 3.80, when referring to, for example, temperatures). The recitation of end points also includes the end point values themselves (*e.g.* from 1.0 to 5.0 includes both 1.0 and 5.0).

Where a percentage is recited in respect of a quantity, it refers to a weight ratio (w/w), unless otherwise indicated. Information on weights is expressed as percent weight of the total weight of the margarine-like composition, unless otherwise specified.

The term *"laminated dough"* as used herein is intended to refer to a bakery product comprising subsequent layers of dough and layers of a fat-containing composition. Non-limitative examples of laminated doughs include puff pastries, croissants, Danish pastries, layered snacks, sausage rolls, apple or general fruit turnovers, etc.

### Composition

In a first aspect, the present invention is directed to a margarine-like composition for laminated doughs comprising a fat phase and aqueous phase in a well-balanced ratio, with a particular selection of emulsifiers in the fat phase and thickeners in the aqueous phase.

In particular, the present invention provides a margarine-like composition for laminated doughs comprising
- from 45 to 65 %, and preferably from 50 to 58 % by weight of the composition of a fat phase comprising a fat blend and at least one emulsifier, and
- from 35 to 55 % and preferably from 42 to 50 % by weight of the composition of an aqueous phase comprising water and at least two thickeners, whereby at least one first thickener is an alginate and at least one second thickener is selected from the group consisting of inulin, maltodextrin, and acacia gum.

The Applicants have shown that margarine-like compositions having less than 45wt% of a fat phase, when used for preparing laminated doughs, result in laminated doughs such as croissants that do no longer have a uniform laminated appearance and structure. The Applicants have shown that fat components of the composition are at least partly taken up by the dough during the fabrication of the different layers and as a result thereof "bread/bun like" products ("bun-like" products) are formed. Moreover, using a fat phase of at least 45wt% in the present composition has the effect that less water is pressed out of the composition during margarine production and working and that less free water is formed, which involves a reduced risk for microbial contamination and thus improved effects on the shelf-life of the product. On the other hand, margarine-like composition according to the invention having less than 65wt% of a fat phase enable the preparation of fat-reduced laminated dough, which are healthier food products compared to dough prepared with higher amounts of fat. The present invention is therefore directed to a composition, which has an optimal balance of fat phase and aqueous phase.

In a preferred embodiment, said fat phase comprises a fat blend and at least one emulsifier. Preferably the composition contains up to 65wt% and preferably between 50 and 58wt% of the composition of a fat phase.

In a preferred embodiment, the fat phase comprises a fat blend. In a preferred embodiment, the invention provides a composition for laminated dough wherein said fat blend comprises vegetable solid fat(s) and vegetable oil(s) of which a part can be hydrogenated, interesterified or fractionated fats, so as to obtain a consistency (solid fat profile) as is customary for laminating margarines (see example 1 and 2). Fat(s) and oil(s) can be selected from the group comprising safflower oil, sun flower oil, corn oil, cottonseed oil, rapeseed oil, soybean oil, olive oil, coconut oil, palm oil, and palmstearin. Techniques and compositions of vegetable fat blends and techniques for preparation thereof for use in laminating margarines are well known in the art and will therefore not be described in detail herein.

The fat phase of the present composition comprises at least one emulsifier.

In one embodiment said emulsifier is a citric acid ester. As used herein, the term "citric acid ester" refers to a compound obtained as a result of the reaction of citric acid with a monoglyceride. These monoglycerides can be from vegetable or animal origin, saturated or unsaturated. Citric acid esters used herein and also called citrated glycerides, and are denominated as E472c in food technology. They form a highly hydrophilic emulsifier with a stable alpha-crystal structure. Citric acid esters are well known in the art. For example citric acid esters suitable for use in the present composition are available e.g. under the trademark Grindsted ® Citrem. In a preferred embodiment, citric acid ester is used in a composition according to the invention in an amount of between 0.2 and 2.5 %, preferably of between 0.5 and 1 % by weight of the composition.

In another embodiment the present composition comprises another emulsifier, different from citric acid ester, and selected from the group consisting of monoglycerides of fatty acids, diglycerides of fatty acids and mixtures thereof, whereby said fatty acids may include but are not limited to saturated, mono-unsaturated, and poly-unsaturated fatty acids, and preferably are saturated fatty acids, and more preferably C14-C22 saturated fatty acids. Examples of suitable emulsifiers include but are not limited to a monoglyceride of a saturated fatty acid or a diglyceride of saturated fatty acids, wherein said saturated fatty acid is a C14-22 fatty acid such as myristic acid, palmitic acid, stearic acid, arachidic acid, behenic acid, and combinations of these fatty acids in all proportions.

In a preferred embodiment, a composition according to the invention is provided wherein the amount of mono- and/or diglycerides of fatty acids is comprised between 0.2 and 2.5 %, and preferably between 0.5 and 1 % by weight of the composition.

In a preferred embodiment, the invention provides a composition comprising in the fat phase an emulsifier consisting of monoglycerides of saturated fatty acids, and more preferably of C14-C22 saturated fatty acids. Preferably said monoglycerides of saturated fatty acids, and more preferably said monoglycerides of C14-C22 saturated fatty acids are comprised in the fat phase in an amount of between 0.2 and 2.5 %, and preferably of between 0.5 and 1 % by weight. In an example, the invention provides a composition comprising in the fat phase an emulsifier consisting of monoglycerides of fully hydrogenated, and/or fractionated palmoil. The monoglycerides are distilled or not distilled, and preferably provided in amount of between 0.2 and 2.5 %, and preferably of between 0.5 and 1 % by weight. The suitable amounts of monoglycerides of fatty acids added to the present composition have been carefully determined by the Applicants. The indicated lower limit is relevant in order to obtain acceptable emulsifying properties, while amounts higher than the indicated upper limits have a negative effect on the mouthfeel in end products prepared using the present margarine-like compositions.

In yet another embodiment, the present invention also relates to a composition having a fat phase comprising a mixture of a citric acid ester as defined above and another emulsifier, preferably different from said citric acid ester, and selected from the group consisting of monoglycerides of fatty acids, diglycerides of fatty acids and mixtures thereof as defined above.

In another preferred embodiment, said aqueous phase comprises water, and at least two thickeners whereby at least one first thickener is an alginate and at least one second thickener is selected from the group consisting of inulin, maltodextrin, and acacia gum.

As used herein, the term "alginate" refers to a hydrocolloid gum. Alginate is a family of unbranched binary copolymers of (1-4-linked - β-D-mannuronic acid (M) and α-L-guluronic (G)). Alginate is used to reduce fat levels by allowing increased water contents in the lowered fat foods, the hydrocolloid serving to bind water. Without being bound by a theory the Applicants assume that in emulsions the alginate extends beyond the water-oil interface and interacts with the emulsifier present in the composition and modifies the stability of the emulsion.

An alginate which may be used in a composition according to the invention is preferably sodium alginate, potassium alginate or combinations thereof and preferably is potassium alginate.

In a preferred embodiment, the invention provides a composition wherein the amount of alginate is comprised between 0.1 and 2%, and preferably between 0.5 and 1% by weight of the composition. The amounts of alginate in the present composition have been carefully determined by the Applicants in order to provide good organoleptic (taste, flavor) and physical properties to end products prepared with the composition. Using the indicated amounts of alginate enables to provide a good flavor effect in baked end products, while further also providing a laminated dough product that is crispy and has a good mouthfeel. The presence of alginates in the indicated amounts permits to avoid the preparation of laminate doughs that would taste like "chewing gum" in the mouth. Amounts of alginate higher than the ones disclosed herein may lead to a destabilization of the emulsion, in which circumstances the beneficial effect on crispiness and mouthfeel of the laminated product disappears.

The Applicants have carefully determined the relative amounts of alginate and the emulsifier(s) which can be used in a composition according to the invention. Preferably, the amounts of alginate and the emulsifier(s) are comprised within the mathematical distribution, as illustrated on **FIG.1****.** In accordance with the present invention and as illustrated on **FIG. 1** the minimum concentration of the emulsifiers is 0.2wt% when 0.5wt% alginate is present, the maximum concentration of emulsifier is 2.5wt% when 0.5wt% alginate is present. The minimum concentration alginate is 0.1% when 0.7wt% emulsifier is present. The maximum concentration alginate is 2wt% when 0.7wt% emulsifier is present. These concentrations, when plotted in a figure with the concentration of alginate on the Y-axis and the concentration emulsifier on the X-axis, form a geometric figure. All combinations of amounts of alginate and emulsifier(s) inside this geometric form are suitable for use in the margarine-like composition of the invention.

In particular, the invention provides a composition comprising a particular relative amount of alginate and of emulsifier(s). When the amount of emulsifier is chosen between 0.2 and 2.5% by weight of the composition the amount of alginate is determined by the following equations (1) and (2):
**(1)** When X is comprised between 0.2 and 0.7 wt%, Y ≥ -0.8 X + 0.66 wt% and Y ≤ 3 X - 0.1 wt%, and
**(2)** When X is comprised between 0.7 and 2.5 wt%, Y ≥ 0.22 X - 0.05 wt% and Y ≤ - 0.83 X + 2.58 wt%, and
   whereby X corresponds to an amount of emulsifier(s), and Y corresponds to an amount of alginate.

When the amount of alginate is chosen between 0.1 and 2.0% by weight of the composition the amount of emulsifier(s) is determined by the following equations (3) and (4):
**(3)** When Y is comprised between 0.1 and 0.5 wt%, X ≥: (-Y + 0.66) /0.8 wt% and × ≤ (Y + 0.05) /0.22 wt%, and
**(4)** When Y is comprised between 0.5 and 2.0 wt%, × ≥ (Y + 0.1) / 3 wt% and × ≤ ( -Y + 2.58) / 0.83 wt%,
whereby X corresponds to an amount of emulsifier(s), and Y corresponds to an amount of alginate.

In one embodiment a composition is provided wherein, when the amount of alginate is 0.5wt%, the amount of emulsifier(s) is comprised between 0.2 and 2.5wt%, and preferably is 0.7wt%, and when the amount of emulsifier(s) is 0.7wt%, the amount of alginate is comprised between 0.1 and 2wt%, and preferably is 0.5wt%.

In a further preferred embodiment, a composition of the invention has at least one additional thickener besides alginate. Said additional thickener may be inulin, maltodextrin or acacia gum.

In a preferred embodiment, said additional thickener, i.e. either inulin, maltodextrin or acacia gum as defined hereunder, is present in the composition in an amount of between 1.5 and 7%, preferably between 2 and 5 % by weight of the composition. Using the indicated amounts of additional thickeners results in a margarine, which when used for preparing laminated doughs, provides a positive effect on the mouth feel and flavor of baked laminated dough products. Further the indicated amounts of additional thickeners also permit to avoid the preparation of laminate doughs tasting like "chewing gum" in the mouth. In the indicated amounts the additional thickeners when combined with alginate provide synergetic effects on the taste of laminated dough products. Such effects are absent or less pronounced when using composition according to the invention comprising either only alginates or only additional thickeners but not alginates.

In one embodiment, said additional thickener is inulin. As used herein, the term "inulin" is intended to refer to a polysaccharide of fructose units connected by β-(2-1) links. The molecular weight of inulin is dependent upon its source. lnulin as used herein can be derived from plant tubers, such as but not limited to, dahlia, Jerusalem artichokes and chicory. lnulin, being a water soluble fiber, is associated with improved digestion and absorption of certain minerals, particularly calcium. Furthermore, being a prebiotic, inulin favors the growth of probiotic bacteria in the intestine with all the related beneficial effects. An illustrative examples of an inuline product for use in the current embodiments, is inuline available from Orafti S.A., Belgium, under the trade name Raftiline^{™}. In accordance with the present invention, inulin contained in a composition according to the invention is derived from chicory, and having a total number of fructose or glucose units (degree of polymerisation, DP) ranging mainly between 2 and 60.

In a preferred embodiment a composition according to the invention, comprises inulin in an amount of between 1.5 and 7 %, preferably between 2 and 5% by weight of the composition.

In another embodiment, said additional thickener is maltodextrin. As used herein, the term "maltodextrin" is intended to refer to a nutritive saccharide polymer that consists of D-glucose units linked primarily by α-1-4 bonds and that has a dextrose equivalent, abbreviated as DE. Maltodextrin can be derived from any starch, including but not limited to corn starch, potato starch, or rice starch, by partial hydrolysis with safe and suitable acids and enzymes. It is available as a powder or concentrated solution. Maltodextrin either can be moderately sweet or have hardly any flavor at all. Maltodextrin is easily digestible, being absorbed as rapidly as glucose.

Dextrose equivalence reflects the amount of hydrolysis performed upon the starch and measures the amount of reducing sugar in each compounds, 0 being the reducing sugar content of starch and 100 being the reduction power of dry glucose. In accordance with the present invention, maltodextrin contained in a composition according to the invention preferably has a DE of between 2 and 3. In a preferred embodiment said maltodextrin is obtained from potato. The Applicants has shown that when maltodextrin having a higher DE, e.g. obtained from waxy maize or maize, were used to prepare a margarine-like composition and laminated dough products, layer formation in the prepared dough products was seriously hampered, and water droplets were expelled out of the composition during preparation of the dough products.

In a preferred embodiment a composition according to the invention, comprises maltodextrin as defined above in an amount of between 1.5 and 7%, preferably between 2 and 5% by weight of the composition.

In yet another embodiment, said additional thickener is acacia gum. The term "acacia gum" as used herein intends to include acacia gum as such, as well as "processed acacia gum". Acacia gum is also denoted as gum arabic or E414. "Processed acacia gum" refers to acacia gum that has been processed with other component(s) and in particular refers to compositions comprising more than 95wt% of acacia gum. An example of processed acacia gum is known under the trade name "equacia" and consists of 98wt% acacia gum and 2% wheat fibers.

In a preferred embodiment a composition according to the invention comprises acacia gum as defined above in an amount of between 1.5 and 7 %, preferably between 2 and 4 % by weight of the composition.

The Applicants have also carefully determined the relative amounts of alginate and the second thickener, either inulin, maltodextrin or acacia gum as defined herein, which can be used in a composition according to the invention. Preferably, the amounts of alginate and second thickener are comprised within the mathematical distribution, as illustrated on **FIG. 2****.** In accordance with the present invention and as illustrated on FIG. 2 when the amount of second thickener is between 1.5 and 7 %, the minimum amount of the alginate is 0.1wt%, and when the amount of the second thickener is between 1.5 and 4.5wt%, the maximum amount of alginate is 2 wt%. The minimum amount of a second thickener is 1.5wt% when the amount of the alginate is between 0.1 and 2wt% while the maximum amount of a second thickener is 7wt% when the amount of the alginate is between 0.1 and 1 wt%. These amounts can be plotted in a figure with the amount alginate on the Y-axis and the amount second thickener on the X'-axis, and by adding a line Y = -0.4 X' + 3.8 to this plot, a mathematical distribution is obtained within which the relative amounts of alginate and second thickener according to the invention can be chosen.

In particular, the invention provides a composition comprising a particular relative amount of alginate and of second thickener. When the amount of second thickener (X') is chosen between 1.5 and 7wt% by weight of the composition the amount of alginate is determined by the following equations (5) and (6):
**(5)** when ×' is comprised between 1.5 and 4.5 wt%, Y is comprised between 0.1 and 2 wt%, and
**(6)** when X' is comprised between 4.5 and 7 wt%, Y ≥ 0.1 wt% and Y ≤ -0.4 X'+ 3.8 wt% whereby Y corresponds to an amount of alginate and X' corresponds to an amount of a second thickener.

When the amount of alginate is chosen between 0.1 and 2.0wt% by weight of the composition the amount of second thickener is determined by the following equations (7) and (8):
**(7)** when Y is comprised between 0.1 and 1.0 wt%, X' is comprised between 1.5 and 7 wt%, and
**(8)** when Y is comprised between 1.0 and 2.0 wt%, ×'≥ 1.5wt% and ×'≤ (-Y + 3.8)/0.4 wt% whereby Y corresponds to an amount of alginate and X' corresponds to an amount of a second thickener.

In one embodiment, a composition is provided wherein when the amount of alginate is 0.5wt%, the amount of second thickener is comprised between 4 and 5wt%.

A composition according to the invention may further comprise one or more additional components including but not limited to pH regulators, diary flavoring agents, coloring agents, antioxidants, salts, acidulants, minerals, proteins, vitamins, preservatives, and the like. These additional components are well known by a skilled person and will not be disclosed in detail herein.

In one exemplified embodiment the invention provides a composition comprising 54.5 % by weight of a vegetable fat, 0.7 % by weight of a citric acid ester, 38 % by weight of water; 0.5 % by weight of a potassium alginate, and 5 % by weight of inulin.

In another exemplified embodiment the invention provides a composition comprising 54.5 % by weight of a vegetable fat, 0.7 % by weight of a citric acid ester, 38 % by weight of water; 0.5 % by weight of a potassium alginate, and 5 % by weight of maltodextrin. In yet another particularly preferred embodiment the invention provides a composition comprising 54.5 % by weight of a vegetable fat, 0.7 % by weight of a citric acid ester, 39 % by weight of water; 0.5 % by weight of a potassium alginate, and 4 % by weight of acacia gum.

In yet another exemplified embodiment, a composition according to the invention comprises
- between 50 and 55wt% of a fat blend, e.g. 40 % palmoil, 40 % palmstearin and 20 % a vegetable oil, e.g. rapeseed oil,
- between 0.5 and 0.7wt% of at least one emulsifier which is A) a citric acid ester, or B) a monoglyceride of a C14-C22 fatty acid, e.g fully hydrogenated palmoil,
- between 37 and 40wt% of water,
- 0.5wt% of an alginate, and
- 4 to 5wt% of at least one second thickener which is selected from the group consisting of inulin, maltodextrin, and acacia gum.

Compositions according to the present invention have particularly suitable properties, including good rolling-out properties, stability, plasticity, hardness. Further the margarines of the invention are easy to handle and facilitate the processing of laminated dough. In particular, during fabrication of the margarine, there is no water release during extrusion of the margarine. Moreover, the present composition enables essentially the same handling and extrusion properties as standard laminating margarines of 80 % fat. Also, when using a composition according to the invention to prepare laminated dough, no sticky dough is obtained, the products shows continuous fat layers. In addition, laminated doughs such as croissants, prepared using the present compositions fulfill desired sensory requirements such as good texture and appearance, crispiness, fluffiness and taste.

### Method

In another aspect the invention provides a process for the preparation of a composition for laminated dough according to the invention, comprising the steps of:
a) preparing an aqueous phase, preferably at a temperature of 75-85°C, of at least two thickeners solved in water whereby at least one first thickener is an alginate as defined herein and at least one second thickener is selected from the group consisting of inulin, maltodextrin, and acacia gum as defined herein;
b) preparing a fat phase preferably at a temperature at 70 to 80°C comprising
   a. a fat blend as defined herein, and
   b. at least one emulsifier as defined herein, whereby said emulsifier is
      i) a citric acid ester, or
      ii) an emulsifier, different from said citric acid ester, and selected from the group consisting of monoglycerides of fatty acids and diglycerides of fatty acids and mixtures thereof, or
      iii) a mixtures of i) and ii).
   c. optionally fat-soluble ingredients such as e.g. b-carotene,
c) adding the aqueous phase of step a) during stirring to fat phase of step b) at a temperature of 60-80°C thereby obtaining an emulsion,
d) plasticizing the composition of step c), and
e) leaving the composition of step d) to rest for 2 to 8 days at 5-15 °C.

According to a particular embodiment the method may comprise the following steps:
a) preparing a hot, homogeneous aqueous phase, preferably at 75-85°C, of at least two thickeners solved in water whereby at least one first thickener is an alginate as defined herein and at least one second thickener is selected from the group consisting of inulin, maltodextrin, acacia gum as defined herein;
b) preparing a homogeneous fat phase by the steps of:
   b1) preparing a first fat composition by blending fats and oils as defined herein;
   b2) preparing at a temperature of between 70 and 80°C a second fat composition,
   whereby said composition is a homogeneous mixture of one or more vegetable fats as defined herein and at least one emulsifier as defined herein, and preferably (i) a citric acid ester, or (ii) an emulsifier, different from said citric acid ester, and selected from the group consisting of monoglycerides of fatty acids and diglycerides of fatty acids and mixtures thereof, or (iii) a mixture of i) and ii), and
   b3) optionally preparing at room temperature a third fat composition, whereby said composition is a homogeneous mixture of one or more vegetable fats as defined herein and fat-soluble ingredients such as e.g. b-carotene, and
   b4) blending the fat compositions obtained in steps b1), b2), b3),
c) adding the aqueous phase of step a) during stirring to fat phase of step b) at a temperature of 60-80°C thereby obtaining an emulsion,
d) plasticizing the composition of step c), and
e) leaving the composition of step d) to rest for 2 to 8 days at 5-15 °C.

In a preferred embodiment, the aqueous phase prepared in step a) also contains all the other water-soluble ingredients such as e.g. salt, citric acid, etc. In another preferred embodiment, the fat phase prepared in step b) contains all fat-soluble ingredients such as fats, emulsifiers, coloring agents, etc.

During step a) a stock solution of alginate with the second thickener is preferably made by first dispersing an alginate as defined herein in water at 75-85 °C with stirring and adding, still when stirring, inulin or maltodextrin or acacia gum in amounts and ratios as defined above. This stock solution is than dosed in the aqueous phase, i.e. the phase a) mentioned above. The aqueous dispersion preferably has a temperature between 50-65 °C.

According to the present method, a fat composition is prepared by blending one or more vegetable fats, e.g. palm oil, palm stearine, soybean oil, coconut oil, etc. In addition, an emulsifier phase is prepared and is added to said fat blend.

Preferably plasticizing is performed on a scraped surface crystallizer with pinrotors to obtain e.g. 22°C at the moment of packaging.

The following non-limiting examples illustrate the invention and do not limit its scope in any way. In the examples and through this specification, all percentages, parts and ratios are by weight of the margarine-like composition unless indicated otherwise.

### EXAMPLES

### Example 1: Compositions according to the invention

Table 1 represents examples of compositions for laminated dough according to the invention.

**Table 1**

| | Composition 1 (in wt%) | Composition 2 (in wt%) | Composition 3 (in wt%) |
|---|---|---|---|
| vegetable fats (1) | 54.5 | 54.5 | 54.3 |
| a citric acid ester (2) | 0.7 | | 0.7 |
| Mono- and di-glycerides (3) | | 0.5 | |
| water | 38 | 37.9 | 38.9 |
| Alginate (4) | 0.5 | 0.5 | 0.5 |
| Inulin (5) | 5 | 5 | |
| Acacia gum (6) | | | 4 |
| diacetyl | 0.002 | 0.005 | 0.005 |
| b-carotene | 0.008 | 0.005 | 0.005 |
| citric acid anhydrate | 0.05 | 0.05 | 0.05 |
| NaCI | 1.2 | 1.5 | 1.5 |
| potassium sorbate (7) | 0.04 | 0.04 | 0.04 |

| | | | |
|---|---|---|---|
| (1) 40 % palmoil, 40 % palmstearin and 20 % a vegetable oil, e.g. rapeseed oil (2) citric acid esters of monodiglycerides E472c (Cargill) (3) mono and di glycerides correspond to Dimodan HP, Danisco (4) potassium alginate, in particular Satialigne LSP262 (Cargill) (5) inulin Beneo HP (Orafti SA); (6) acacia gum corresponds to a composition comprising 98wt% acacia gum and 2wt% wheat fibers (also known as equacia) purchased from Kreglinger (7) potassium sorbate (Caldic Belgium) | | | |

### Example 2: Comparative example

**Table 2** illustrates examples of compositions which were used for preparing laminated doughs. Compositions 2 and 4 correspond to compositions according to the invention. In compositions 1, 3, 5, 7 and 8, alginate is absent. Composition 6 comprises an emulsifier and alginate but no additional thickener. Composition 7 and 8 contain pectin.

**TABLE 2**

| | ref | 1 | 2 | 3 | 4 | 5 | 6 | 7 | 8 |
|---|---|---|---|---|---|---|---|---|---|
| Vegetable fats⁽¹⁾ | 79.5 | 54.3 | 54.3 | 54.3 | 54.3 | 54.3 | 54.3 | 54.3 | 54.3 |
| citric acid ester ⁽²⁾ | 0.5 | 0.7 | 0.7 | 0.7 | 0.7 | 0.7 | 0.7 | 0.7 | 0.7 |
| mono / di glycerides ⁽³⁾ | | | | | | | | | |
| inulin ⁽⁴⁾ | | 5 | 5 | | | | | 5 | |
| Alginate ⁽⁵⁾ | | | 0.5 | | 0.5 | | 1.5 | | |
| Maltodextrine ⁽⁶⁾ | | | | 5 | 5 | | | | |
| Maltodextrine⁽⁷⁾ | | | | | | 5 | | | |
| Pectin ⁽⁸⁾ | | | | | | | | 0.5 | 1 |
| Water | 18.44 | 38.4 | 37.9 | 38.4 | 37.9 | 38.4 | 41.9 | 37.9 | 42.4 |
| Butter flavour (diacetyl) | 0.005 | 0.005 | 0.005 | 0.005 | 0.005 | 0.005 | 0.005 | 0.005 | 0.005 |
| b-carotene | 0.005 | 0.005 | 0.005 | 0.005 | 0.005 | 0.005 | 0.005 | 0.005 | 0.005 |
| Salt | 1.5 | 1.5 | 1.5 | 1.5 | 1.5 | 1.5 | 1.5 | 1.5 | 1.5 |
| citric acid anhydrate | 0.03 | 0.05 | 0.05 | 0.05 | 0.05 | 0.05 | 0.05 | 0.05 | 0.05 |
| potassium sorbate | 0.02 | 0.04 | 0.04 | 0.04 | 0.04 | 0.04 | 0.04 | 0.04 | 0.04 |

| | | | | | | | | | |
|---|---|---|---|---|---|---|---|---|---|
| (1) vegetable fats correspond to 10 % coconutoil, 15 % soybeanoil, 40 % palmoil, 35 % palmstearin (2) citric acid esters correspond to citric acid ester of mono & diglycerides (E472c), Cargill; (3) mono and di glycerides correspond to Dimodan HP, Danisco (4) inulin corresponds to inulin beneo HP, Orafti SA (5) Alginate corresponds to satialigne LSP262, Cargill (6) maltodextrin corresponds to C*drylight MD01970,Cargill (7) maltodextrin corresponds to C*Dry MD 01904, Cargill (8) pectin corresponds to unipectin OF405C, Cargill | | | | | | | | | |

The margarine-like composition was prepared according to the method as described above. In case of compositions comprising alginate and a second thickener, a stock solution was made of the hydrocolloids at 80°C. In case of only one hydrocolloid different from alginate, the powder of the hydrocolloids was directly added to the aqueous phase and heated up to 60° for pectin, up to 85°C for maltodextrin and up to 75°C for inulin. After the heating step, that aqueous phase was cooled till 60°C. An aqueous phase and a fat phase were prepared as described above and mixed together. The obtained homogenous emulsion was transferred to a scraped surface plasticizer for plasticization and was finally sent on to packaging and storage for 7 days at 12 °C. The margarine was then ready to be used for the preparation of laminated doughs.

The properties of the obtained margarines were evaluated. Evaluation was done by calibrated kneaders. Results thereof are illustrated in Table 3.

**Table 3**

| | ref | 1 | 2 | 3 | 4 | 5 | 6 | 7 | 8 |
|---|---|---|---|---|---|---|---|---|---|
| plasticity | ++ | ++ | ++ | ++ | ++ | + | + | + | + |
| free water | - | - | - | - | - | + | - | + | +++ |

From these results it can be noted that compositions 1, 2, 3, 4 and to a lesser extent 6, have suitable properties which are comparable with those of a reference margarine of 80% fat. margarine like compositions 5, 7 and 8 had too much un-retained water.

### Example 3: Laminated dough

Using the compositions prepared as described in example 3 croissants were prepared. There for a pre-dough was made according to techniques known in the art using the following recipe (Table 4)

**Table 4**

| **Pre-dough for croissant** | **Gram** |
|---|---|
| Flour | 1250 |
| Sugar | 100 |
| Water | 575 |
| Yeast | 100 |
| Salt | 25 |
| eggs | 100 |

For preparation of the croissant 500 g fat composition for 2 kg pre-dough was used. Croissants were made by the steps of:
- mixing and kneading of the pre-dough
- resting for 10 minutes
- rolling of dough to a square
- providing the pre-dough with the fat composition, e.g. by applying the composition on top of the pre-dough, the fat composition had a temperature of 20°C, and
- folding and laminating.

The obtained laminated dough was proofed for 45 minutes (32°C; 85% R.H). The obtained products were then baked at 220°C for about 17 minutes. The height of the obtained baked products (12 croissants) was determined (see Table 5).

**Table 5**

| | ref | 1 | 2 | 3 | 4 | 5 | 6 | 7 | 8 |
|---|---|---|---|---|---|---|---|---|---|
| Height (cm) | 74 | 72 | 74 | 72 | 74 | 67 | 68 | 69 | 62 |

From these results it appears that croissants made with fat compositions 5, 6, 7 and 8 are smaller since the fat composition was not sufficiently plastic and had free water after extrusion. Margarine like compositions 5, 7 and 8 had too much un-retained water when kneading and laminating the dough during preparation of the croissants, the water was pushed out of the margarine. This results in a stickier dough/fat product what results in smaller croissants. The fat/dough layers were not fully separated what results in less lift and smaller croissants. The crumb structure can be compared with a sandwich dough.

The croissants with the combination of alginate and a second thickener (compositions 2, 4) are higher than those without the alginate (compositions 1 and 3) and have a very nice layering. The taste and organoleptic properties of resulting croissant were evaluated by a trained taste panel and were reported to be as follows.

The taste of croissant made with composition 8 was more like a bun- or bread-like product than the taste of a layered product. The croissants made with compositions 5, 6 and 7 were not crispy and stayed very long in the mouth, they were chewy.

Thus croissants obtained using the margarine-like composition 2 and 4, and thus comprising a combination of at least one emulsifiers and at least two thickeners, alginate with inulin or alginate with maltodextrin, consisted of a nicely plastic margarine-like product that resulted in croissants which were well layered and had volume comparable to that of croissants made with a conventional 80% fat margarine. Croissant made with compositions 2 and 4, compared with croissant made with compositions 1 and 3 (thus without alginate), were crispier and stayed less long in the mouth (what is preferred), which illustrates that a combination of alginate with a second thickener has a clear advantage on taste and mouth feel. Croissants made with the reference margarine and with compositions 2 and 4 were very comparable with respect to shape, taste and layering.

## Claims

1. Composition for laminated dough comprising, in percentage by weight of the total weight:
- from 45 to 65 % of a fat phase comprising a fat blend and at least one emulsifier,
- from 35 to 55% of an aqueous phase comprising water, and at least two thickeners whereby at least one first thickener is an alginate and at least one second thickener is selected from the group consisting of inulin, maltodextrin, and acacia gum,
whereby said emulsifier is
i) a citric acid ester, or
ii) an emulsifier, different from said citric acid ester, and selected from the group consisting of monoglycerides of fatty acids and diglycerides of fatty acids and mixtures thereof, or
iii) a mixture of i) and ii).

2. Composition according to claim 1, wherein the amount of citric acid ester is comprised between 0.2 and 2.5 % by weight of the composition.

3. Composition according to claim 1, wherein the amount of said mono- and/or diglycerides of fatty acids is comprised between 0.2 and 2.5 % by weight of the composition.

4. Composition according to any of claims 1 to 3, wherein said emulsifier, different from said citric acid ester, is a monoglyceride of a C14-C22 saturated fatty acid.

5. Composition according to any of claims 1 to 4, wherein the amount of alginate is comprised between 0.1 and 2% by weight of the composition.

6. Composition according to any of claims 1 to 5, wherein said alginate is potassium alginate.

7. Composition according to any of claims 1 to 6, wherein amount of said second thickener is between 1.5 and 7% by weight of the composition.

8. Composition according to any of claims 1 to 7, wherein said second thickener is potato maltodextrin having a dextrose equivalence (DE) comprised between 2 and 3.

9. Composition according to any of claims 1 to 8, wherein the amounts of alginate (Y) and of emulsifier(s) (X) are determined by the following equations (1) to (4):
**(1)** When X is comprised between 0.2 and 0.7 wt%, Y ≥ -0.8 X + 0.66 wt% and Y ≤ 3 X - 0.1 wt%, and
**(2)** When X is comprised between 0.7 and 2.5 wt%, Y ≥ 0.22 X - 0.05 wt% and Y ≤ - 0.83 X + 2.58 wt%, and
**(3)** When Y is comprised between 0.1 and 0.5 wt%, × ≥ (-Y + 0.66) /0.8 wt% and X ≤ (Y + 0.05) /0.22 wt%, and
**(4)** When Y is comprised between 0.5 and 2.0 wt%, × ≥ (Y + 0.1) /3 wt% and × ≤ (-Y + 2.58) / 0.83 wt%,
whereby X corresponds to an amount of emulsifier(s), and Y corresponds to an amount of alginate.

10. Composition according to any of claims 1 to 9, wherein, when the amount of alginate is 0.5wt%, the amount of emulsifier(s) is comprised between 0.2 and 2.5wt%, and when the amount of emulsifier(s) is 0.7wt%, the amount of alginate is comprised between 0.1 and 2wt%.

11. Composition according to any of claims 1 to 10, wherein the amount of alginate (Y) and of second thickener (X') are determined by the following equations (5) to (8):
**(5)** when X' is comprised between 1.5 and 4.5 wt%, Y is comprised between 0.1 and 2 wt%, and
**(6)** when X' is comprised between 4.5 and 7 wt%, Y ≥ 0.1wt% and Y ≤ -0.4 X'+ 3.8 wt%, and
**(7)** when Y is comprised between 0.1 and 1.0 wt%, X' is comprised between 1.5 and 7 wt%, and
**(8)** when Y is comprised between 1.0 and 2.0 wt%, X' ≥ 1.5wt% and ×'≤ (-Y + 3.8)/0.4 wt% whereby Y corresponds to an amount of alginate and X' corresponds to an amount of a second thickener.

12. Composition according to claim 11 wherein, when the amount of alginate is 0.5wt%, the amount of second thickener is comprised between 4 and 5wt%.

13. Composition according to any of claims 1 to 12, comprising
- between 50 and 55 wt% of a fat blend,
- between 0.5 and 0.7wt% of at least one emulsifier which is A) a citric acid ester, or B) a monoglyceride and/or diglycerides of C14-C22 fatty acids,
- between 37 and 40wt% of water,
- 0.5wt% of an alginate, and
- 4 to 5wt% of at least one second thickener which is selected from the group consisting of inulin, maltodextrin, and acacia gum.

14. Process for the preparation of a composition for laminated dough according to any of the previous claims 1 to 13, comprising the steps of:
a) preparing a homogeneous aqueous phase of at least two thickeners solved in water whereby at least one first thickener is an alginate and at least one second thickener is selected from the group consisting of inulin, maltodextrin, and acacia gum,
b) preparing a fat phase comprising a fat blend, and at least one emulsifier, whereby said emulsifier is
i) a citric acid ester, or
ii) an emulsifier, different from said citric acid ester, and selected from the group consisting of monoglycerides of fatty acids and diglycerides of fatty acids and mixtures thereof, or
iii) a mixture of i) and ii).
c) adding the aqueous phase of step a) during stirring to fat phase of step b) at a temperature of 60-80°C thereby obtaining an emulsion,
d) plasticizing the composition of step c), and
e) leaving the composition of step d) to rest for 2 to 8 days at 5-15 °C.

15. Use of a composition according to any of the claims 1 to 13 for the preparation of a laminated dough.

## Patentansprüche

1. Zusammensetzung für laminierten Teig, umfassend in Gewichtsprozent bezogen auf das Gesamtgewicht:
- von 45 bis 65 Gew.-% eine Fettphase, die eine Fettmischung und mindestens einen Emulgator umfasst,
- von 35 bis 55 Gew.-% eine wässrige Phase, die Wasser und mindestens zwei Verdickungsmittel umfasst, wobei mindestens ein erstes Verdickungsmittel ein Alginat ist und mindestens ein zweites Verdickungsmittel ausgewählt ist aus der Gruppe, bestehend aus Inulin, Maltodextrin und Akaziengummi,
wobei der Emulgator einer der folgenden ist:
i) ein Citronensäureester oder
ii) ein Emulgator, der ein anderer als der Citronensäureester ist und ausgewählt ist aus der Gruppe, bestehend aus Monoglyceriden von Fettsäuren und Diglyceriden von Fettsäuren und Mischungen davon, oder
iii) eine Mischung von i) und ii) .

2. Zusammensetzung nach Anspruch 1, wobei die Menge des Citronensäureesters zwischen 0,2 und 2,5 Gew.-% der Zusammensetzung liegt.

3. Zusammensetzung nach Anspruch 1, wobei die Menge der Mono- und Diglyceride von Fettsäuren zwischen 0,2 und 2,5 Gew.-% der Zusammensetzung liegt.

4. Zusammensetzung nach einem der Ansprüche 1 bis 3, wobei der Emulgator, der ein anderer als der Citronensäureester ist, ein Monoglycerid einer gesättigten C14-C22-Fettsäure ist.

5. Zusammensetzung nach einem der Ansprüche 1 bis 4, wobei die Menge des Alginats zwischen 0,1 und 2 Gew.-% der Zusammensetzung liegt.

6. Zusammensetzung nach einem der Ansprüche 1 bis 5, wobei das Alginat ein Kaliumalginat ist.

7. Zusammensetzung nach einem der Ansprüche 1 bis 6, wobei die Menge des zweiten Verdickungsmittels zwischen 1,5 und 7 Gew.-% der Zusammensetzung liegt.

8. Zusammensetzung nach einem der Ansprüche 1 bis 7, wobei das zweite Verdickungsmittel ein Kartoffel-Maltodextrin mit einer Dextrose-Äquivalenz (DE) zwischen 2 und 3 ist.

9. Zusammensetzung nach einem der Ansprüche 1 bis 8, wobei die Mengen des Alginats (Y) und des (der) Emulgators (Emulgatoren) (X) durch die folgenden Gleichungen (1) bis (4) ermittelt werden:
(1) wenn X zwischen 0,2 und 0,7 Gew.-% liegt, ist Y ≥ - 0,8 X + 0,66 Gew.-% und Y ≤ 3 X - 0,1 Gew.-%, und
(2) wenn X zwischen 0,7 und 2,5 Gew.-% liegt, ist Y ≥ 0,22 X - 0,05 Gew.-% und Y ≤ -0,83 X + 2,58 Gew.-%, und
(3) wenn Y zwischen 0,1 und 0,5 Gew.-% liegt, ist X ≥ (-Y + 0,66) / 0,8 Gew.-% und X ≤ (Y + 0,05) / 0,22 Gew.-%, und
(4) wenn Y zwischen 0,5 und 2,0 Gew.-% liegt, ist X ≥ (Y + 0,1) / 3 Gew.-% und X ≤ (-Y + 2,58) / 0,83 Gew.-%,
wobei X einer Menge von Emulgator(en) entspricht und Y einer Menge von Alginat entspricht.

10. Zusammensetzung nach einem der Ansprüche 1 bis 9, wobei, wenn die Menge des Alginats 0,5 Gew.-% beträgt, die Menge des (der) Emulgators (Emulgatoren) zwischen 0,2 und 2,5 Gew.-% liegt, und wenn die Menge des (der) Emulgators (Emulgatoren) 0,7 Gew.-% beträgt, die Menge des Alginats zwischen 0,1 und 2 Gew.-% liegt.

11. Zusammensetzung nach einem der Ansprüche 1 bis 10, wobei die Mengen des Alginats (Y) und des zweiten Verdickungsmittels (X') durch die folgenden Gleichungen (5) bis (8) ermittelt werden:
(5) wenn X' zwischen 1,5 und 4,5 Gew.-% liegt, liegt Y zwischen 0,1 und 2 Gew.-%, und
(6) wenn X' zwischen 4,5 und 7 Gew.-% liegt, ist Y ≥ 0,1 Gew.-% und Y ≤ -0,4 X' + 3,8 Gew.-%, und
(7) wenn Y zwischen 0,1 und 1,0 Gew.-% liegt, liegt X' zwischen 1,5 und 7 Gew.-%, und
(8) wenn Y zwischen 1,0 und 2,0 Gew.-% liegt, ist X' ≥ 1,5 Gew.-ö und X' ≤ (-Y + 3,8) / 0,4 Gew.-%,
wobei Y einer Menge eines Alginats entspricht und X' einer Menge eines zweiten Verdickungsmittels entspricht.

12. Zusammensetzung nach Anspruch 11, wobei, wenn die Menge des Alginats 0,5 Gew.-% beträgt, die Menge des zweiten Verdickungsmittels zwischen 4 und 5 Gew.-% liegt.

13. Zusammensetzung nach einem der Ansprüche 1 bis 12, umfassend
- zwischen 50 und 55 Gew.-% eine Fettmischung,
- zwischen 0,5 und 0,7 Gew.-% mindestens einen Emulgator, der A) ein Citronensäureester oder B) ein Monoglycerid und/oder Diglyceride von C14-C22-Fettsäuren ist,
- zwischen 37 und 40 Gew.-% Wasser,
- 0,5 Gew.-% ein Alginat, und
- 4 bis 5 Gew.-% mindestens ein zweites Verdickungsmittel, das ausgewählt ist aus der Gruppe, bestehend aus Inulin, Maltodextrin und Akaziengummi.

14. Verfahren zum Herstellen einer Zusammensetzung für laminierten Teig nach einem der vorstehenden Ansprüche 1 bis 13, umfassend die folgenden Schritte:
a) Herstellen einer homogenen wässrigen Phase von mindestens zwei in Wasser gelösten Verdickungsmitteln, wobei mindestens ein erstes Verdickungsmittel ein Alginat ist und mindestens ein zweites Verdickungsmittel ausgewählt ist aus der Gruppe, bestehend aus Inulin, Maltodextrin und Akaziengummi,
b) Herstellen einer Fettphase, die eine Fettmischung und mindestens einen Emulgator umfasst, wobei der Emulgator einer der folgenden ist
i) ein Citronensäureester oder
ii) ein Emulgator, der ein anderer als der Citronensäureester ist und ausgewählt ist aus der Gruppe, bestehend aus Monoglyceriden von Fettsäuren und Diglyceriden von Fettsäuren und Mischungen davon, oder
iii) eine Mischung von i) und ii) .
c) Zugeben der wässrigen Phase aus Schritt a) unter Rühren zu der Fettphase aus Schritt b) bei einer Temperatur von 60 bis 80 °C, wodurch eine Emulsion erhalten wird,
d) Weichmachen der Zusammensetzung aus Schritt c), und
e) Ruhenlassen der Zusammensetzung aus Schritt d) für 2 bis 8 Tage bei 5 bis 15 °C.

15. Verwendung einer Zusammensetzung nach einem der Ansprüche 1 bis 13 für die Herstellung eines laminierten Teigs.

## Revendications

1. Composition pour pâte laminée, qui comprend, en pourcentage en poids du poids total :
- de 45 à 65 % d'une phase grasse comprenant un mélange de matières grasses et au moins un émulsifiant,
- de 35 à 55 % d'une phase aqueuse comprenant de l'eau, et au moins deux épaississants, au moins un premier épaississant étant un alginate et au moins un second épaississant étant choisi dans le groupe constitué par l'inuline, la maltodextrine, et la gomme d'acacia,
ledit émulsifiant étant
i) un ester d'acide citrique, ou
ii) un émulsifiant, différent dudit ester d'acide citrique, et choisi dans le groupe constitué par les monoglycérides d'acides gras et les diglycérides d'acides gras et leurs mélanges, ou
iii) un mélange de i et ii) .

2. Composition selon la revendication 1, la quantité d'ester d'acide citrique représentant 0,2 à 2,5 % en poids de la composition.

3. Composition selon la revendication 1, la quantité desdits mono- et/ou diglycérides d'acides gras représentant 0,2 à 2,5% en poids de la composition.

4. Composition selon l'une quelconque des revendications 1 à 3, ledit émulsifiant, différent dudit ester d'acide citrique, étant un monoglycéride d'un acide gras saturé en C14-C22.

5. Composition selon l'une quelconque des revendications 1 à 4, la quantité d'alginate représentant 0,1 à 2% en poids de la composition.

6. Composition selon l'une quelconque des revendications 1 à 5, ledit alginate étant l'alginate de potassium.

7. Composition selon l'une quelconque des revendications 1 à 6, la quantité dudit second épaississant étant comprise entre 1,5 et 7% en poids de la composition.

8. Composition selon l'une quelconque des revendications 1 à 7, ledit second épaississant étant une maltodextrine de pomme de terre ayant un équivalent dextrose (ED) compris entre 2 et 3.

9. Composition selon l'une quelconque des revendications 1 à 8, les quantités d'alginate (Y) et d'émulsifiant(s) (X) étant déterminées par les équations (1) à (4) suivantes :
(1) lorsque X est compris entre 0,2 et 0,7% en poids, Y ≥ -0,8 X + 0,66% en poids et Y ≤ 3 X - 0,1% en poids, et
(2) lorsque X est compris entre 0,7 et 2,5% en poids, Y ≥ 0,22 X - 0,05 % en poids et Y ≤ -0,83 X + 2,58% en poids, et
(3) lorsque Y est compris entre 0,1 et 0,5% en poids, X ≥ (-Y + 0,66)/0,8% en poids et X ≤ (Y + 0,05)/0,22% en poids, et
(4) lorsque Y est compris entre 0,5 et 2,0% en poids, X ≥ (Y + 0,1)/3% en poids et X ≤ (-Y + 2,58)/0,83% en poids,
X correspondant ainsi à une quantité d'émulsifiant(s), et Y correspondant à une quantité d'alginate.

10. Composition selon l'une quelconque des revendications 1 à 9, dans laquelle lorsque la quantité d'alginate est de 0,5% en poids, la quantité d'émulsifiant(s) est comprise entre 0,2 et 2,5% en poids, et lorsque la quantité d'émulsifiant(s) est de 0,7% en poids, la quantité d'alginate est comprise entre 0,1 et 2% en poids.

11. Composition selon l'une quelconque des revendications 1 à 10, la quantité d'alginate (Y) et de second épaississant (X') étant déterminée par les équations (5) à (8) suivantes :
(5) lorsque X' est compris entre 1,5 et 4,5% en poids, Y est compris entre 0,1 et 2% en poids, et
(6) lorsque X' est compris entre 4,5 et 7% en poids, Y ≥ 0,1% en poids et Y ≤ -0,4 X' + 3,8% en poids, et
(7) lorsque Y est compris entre 0,1 et 1,0% en poids, X' est compris entre 1,5 et 7% en poids, et
(8) lorsque Y est compris entre 1,0 et 2,0% en poids, X' ≥ 1,5% en poids et X' ≤ (-Y + 3,8)/0,4% en poids
Y correspondant ainsi à une quantité d'alginate et X' correspondant à une quantité d'un second épaississant.

12. Composition selon la revendication 11, dans laquelle, lorsque la quantité d'alginate est de 0,5% en poids, la quantité de second épaississant est comprise entre 4 et 5% en poids.

13. Composition selon l'une quelconque des revendications 1 à 12, qui comprend :
- de 50 à 55% en poids d'un mélange de matières grasses,
- de 0,5 à 0,7% en poids d'au moins un émulsifiant qui est A) un ester d'acide citrique, ou B) un monoglycéride et/ou des diglycérides d'acides gras en C14-C22,
- de 37 à 40% en poids d'eau,
- 0,5 % en poids d'un alginate, et
- de 4 à 5% en poids d'au moins un second épaississant qui est choisi dans le groupe constitué par l'inuline, la maltodextrine, et la gomme d'acacia.

14. Méthode pour la préparation d'une composition pour pâte laminée selon l'une quelconque des revendications 1 à 13, qui comprend les étapes de
a) préparer une phase aqueuse homogène d'au moins deux épaississants résolu dans l'eau où au moins un premier épaississant est un alginate et au moins un second épaississant est choisi dans le groupe constitué par l'inuline, la maltodextrine et la gomme d'acacia,
b) préparer une phase grasse comprenant un mélange de matières grasses et au moins un émulsifiant, ledit émulsifiant étant
i) un ester d'acide citrique, ou
ii) un émulsifiant, différent dudit ester d'acide citrique, et choisi dans le groupe constitué par les monoglycérides d'acides gras et les diglycérides d'acides gras et leurs mélanges, ou
iii) un mélange de i et ii) .
c) ajouter la phase aqueuse de l'étape a) lors de l'agitation, à la phase grasse de l'étape b) à une température de 60-80°C de manière à obtenir une émulsion,
d) plastifier la composition de l'étape c), et
e) laisser reposer la composition de l'étape d) pendant 2 à 8 jours à 5-15 °C.

15. Utilisation d'une composition selon l'une quelconque des revendications 1 à 13 pour la préparation d'une pâte laminée.
